# EUROPEAN PATENT APPLICATION

(11) **EP 1 662 767 A2**
(43) Date of publication of application: **31.05.2006**
(21) Application number: 05025759.1
(22) Date of filing: 25.11.2005
(51) Int. Cl.: H04M 19/04

(54) **Ringtone service server, mobile communication terminal and method for setting incoming call notification in a mobile communication terminal**

(30) Priority: 25.11.2004 KR 2004097677
(71) Applicant: Samsung Electronics Co., Ltd., Suwon-si, Gyeonggi-Do (KR)
(72) Inventor: Lee, Moon-Heui, Samsung Electronics Co., Ltd., Suwon-si, Gyeonggi-do (KR)
(74) Representative: Lang, Johannes

(57) **Abstract**

A method and apparatus for setting incoming call notification of a called party's mobile communication terminal in a calling party's mobile communication terminal are provided. When a call request is sent from the calling party's mobile communication terminal to the called party's mobile communication terminal through a mobile communication network, registered incoming call notification data is sent from an incoming call notification service server to the called party's mobile communication terminal. When the incoming call notification data has been completely received, an incoming call notification data reception completion message is sent to the mobile communication network. When a call connection request is received from the mobile communication network, data set for the incoming call notification is output.

## Description

### BACKGROUND OF THE INVENTION

### 1. Field of the Invention

The present invention generally relates to a method and apparatus for setting a ringtone in a mobile communication terminal. More particularly, the present invention relates to a method and apparatus where a caller sets a ringtone of a called party's mobile communication terminal and the caller makes a call using the set ringtone.

### 2. Description of the Related Art

Recently, various service functions are being added to mobile communication terminals. For example, Internet services are provided such that users can download unique ringtones for their own mobile communication terminals, and an image or voice can be transmitted or received.

A user (or called person) not only can download a desired ringtone using a mobile communication terminal or a personal computer, but also can download a ringtone for a specific caller to identify the caller calling his/her own mobile communication terminal, thereby storing the downloaded ringtone in his/her own mobile communication terminal.

When the user sets a ringtone for a specific caller in his/her own mobile communication terminal, the mobile communication terminal generates the ringtone allocated to the specific caller when a call is generated from the specific caller set by the user. Accordingly, the user can identify who is calling his/her own mobile communication terminal using the ringtone. When the mobile communication terminal outputs the ringtone in the public place or subway, the user not only can determine if his/her own mobile communication terminal has been called, but also can identify a caller calling his/her own mobile communication terminal. When calling and called persons are familiar with each other, the calling person may intend to call the mobile communication terminal of the called person through a ringtone provided from the calling person.

However, there is a problem in that a ringtone of a called party's mobile communication terminal is set regardless of an intention of a caller because the called person arbitrarily sets a ringtone for each caller in a conventional method for setting a ringtone to identify a caller.

### SUMMARY OF THE INVENTION

Accordingly, the present invention has been designed to address the above and other problems occurring in the prior art. Therefore, it is an object of the present invention to provide a method for calling a called party's mobile communication terminal using a ringtone set by a caller at the time of a call connection in a state in which a ringtone of the called party's mobile communication terminal is set by the caller.

The above and other objects of the present invention may be achieved by a method and apparatus according to certain exemplary embodiments of the present invention where setting incoming call notification of a called party's mobile communication terminal in a calling party's mobile communication terminal, comprises sending registered incoming call notification data from an incoming call notification service server to the called party's mobile communication terminal when a call request is sent from the calling party's mobile communication terminal to the called party's mobile communication terminal through a mobile communication network, sending an incoming call notification data reception completion message to the mobile communication network when the incoming call notification data has been completely received, and outputting data set for the incoming call notification when a call connection request is received from the mobile communication network.

### BRIEF DESCRIPTION OF THE DRAWINGS

The above and other objects and advantages of the exemplary embodiments of the present invention will be more clearly understood from the following detailed description taken in conjunction with the accompanying drawings, in which like reference numerals will be understood to refer to like parts, components and structures, where:
FIG. 1 is a block diagram illustrating a ringtone provision system in accordance with an exemplary embodiment of the present invention;
FIG. 2 is a block diagram illustrating a ringtone service server in accordance with an exemplary embodiment of the present invention;
FIG. 3 is a block diagram illustrating a mobile communication terminal in accordance with an exemplary embodiment of the present invention;
FIG. 4 is a flowchart illustrating an operation for setting a ringtone in a calling party's mobile communication terminal in accordance with a first exemplary implementation of the present invention;
FIG. 5 is a flowchart illustrating an operation for receiving and setting a ringtone in a called party's mobile communication terminal in accordance with an exemplary embodiment of the present invention;
FIG. 6 is a flowchart illustrating an operation for setting a ringtone in a calling party's mobile communication terminal in accordance with a second exemplary implementation of the present invention; and
FIG. 7 is a flowchart illustrating the operation of the ringtone provision system in accordance with an exemplary embodiment of the present invention.

### DETAILED DESCRIPTION OF EXEMPLARY EMBODIMENTS

Exemplary embodiments of the present invention will be described in detail herein below with reference to the accompanying drawings. Detailed descriptions of functions and configurations incorporated herein that are well understood by those skilled in the art are omitted for clarity and conciseness. It is to be understood that the phraseology and terminology used herein are for the purpose of setting forth a description and should not be regarded as limiting.

In the following description, incoming call notification includes a ringtone, voice, image, or message output from a called party's mobile communication terminal at the time of a call connection and is conventionally defined and used as a ringtone. In following description, the incoming call notification will be referred to and used as a ringtone.

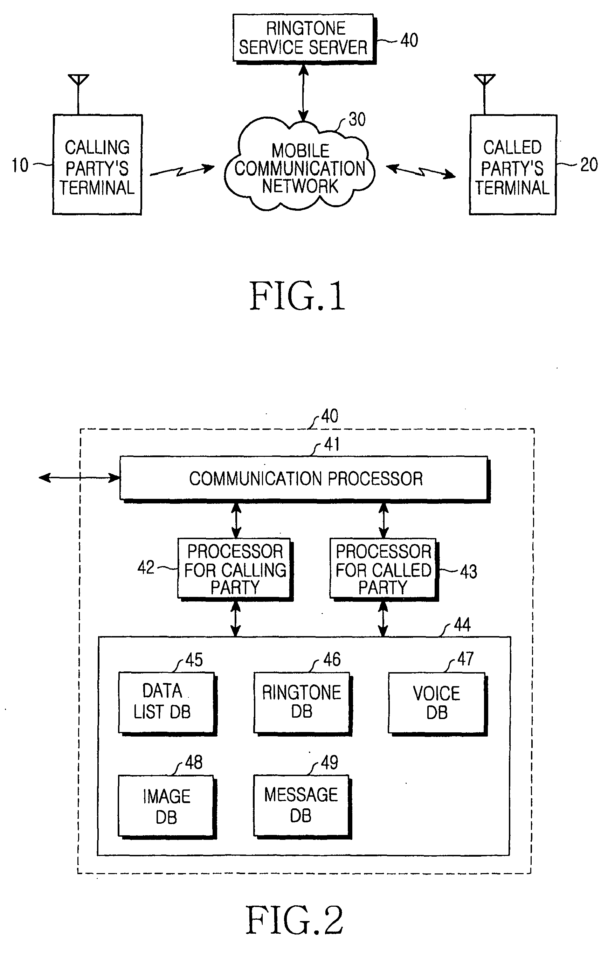

FIG. 1 is a block diagram illustrating a ringtone provision system in accordance with an exemplary embodiment of the present invention. The ringtone provision system will be described with reference to FIG. 1. The ringtone provision system for a mobile communication terminal includes a calling party's terminal 10, a called party's terminal 20, a mobile communication network 30, and a ringtone service server 40.

The calling party's terminal 10 sends a ringtone setup command and a calling/called number to the ringtone service server 40 through the mobile communication network 30 such that a ringtone desired by a caller can be allocated to the called party's terminal 20. Here, the calling party's terminal 10 may be a wireless terminal, a personal computer, or a personal digital assistant (PDA).

The called party's terminal 20 provides a ringtone reception approval message to the mobile communication network 30 to receive a ringtone set by the caller, and receives the ringtone from the ringtone service server 40. Here, the called party's terminal 20 may be a wireless terminal, a personal computer, or a PDA.

The mobile communication network 30 is provided with a plurality of exchanges (EXs) for switching a call path. The EXs are coupled through a link. Each EX is coupled to a plurality of base station controllers (BSCs), and each BSC is coupled to a plurality of base stations (BSs). Each BS is coupled to a plurality of mobile stations (MSs) through a public transmission network. For example, the BS and

MS may be coupled in a time division multiple access (TDMA) or code division multiple access (CDMA) scheme.

Each EX can be coupled to a public switched telephone network (PSTN), an integrated services digital network (ISDN), or another mobile communication network through a predetermined gateway. Moreover, each EX can be coupled to the Internet through an Inter-Working function (IWF) and a wireless application protocol (WAP) gateway.

In the following, a detailed description of the function of the mobile communication network 30 and the operational relation between its components are omitted for conciseness.

The ringtone service server 40 sets a ringtone in response to the caller's ringtone setup command from the calling party's terminal 10 and uploads the set ringtone. Moreover, the ringtone service server 40 extracts the set ringtone and sends the extracted ringtone to the called party's terminal 20 through the mobile communication network 30.

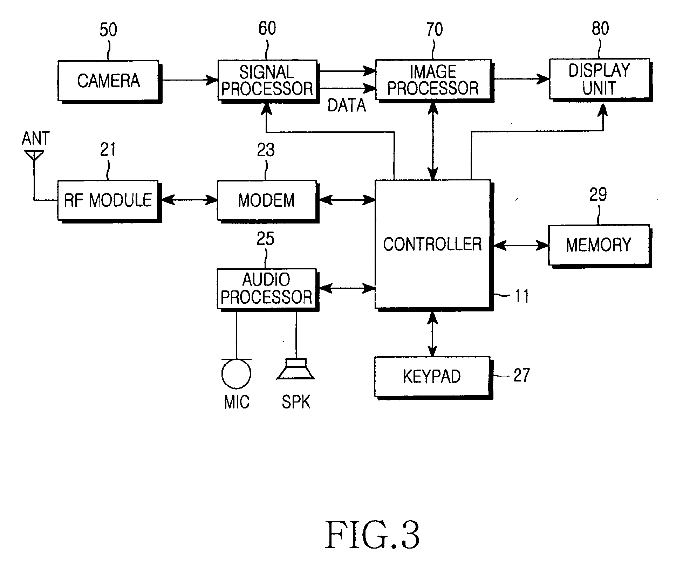

FIG. 2 is a block diagram illustrating the ringtone service server in accordance with an exemplary embodiment of the present invention. A structure of the ringtone service server will be described with reference to FIG. 2. The ringtone service server 40 includes a communication processor 41, a processor 42 for a calling party, a processor 43 for a called party, and a data memory 44.

The communication processor 41 transmits data to and receives data from the calling party's terminal 10 and the called party's terminal 20 through the mobile communication network 30.

In response to the caller's control command received from the calling party's terminal 10 through the communication processor 41, the processor 42 for the calling party sets a ringtone, and transmits the set ringtone, such that the called party's terminal 20 desired by the caller receives the set ringtone.

In response to a ringtone setup command received through the communication processor 41, the processor 43 for the called party sends the set ringtone to the called party's terminal 20 through the communication processor 41.

In this case, the called party's terminal 20 receives and stores the ringtone from the mobile communication network 30. When a call connection is established, the called party's terminal 20 generates the received ringtone.

The data memory 44 includes a data list database (DB) 45, a ringtone DB 46, a voice DB 47, an image DB 48, and a message DB 49 for incoming call notification. The data list DB 45 stores a list of data stored in each DB. A ringtone DB 46 stores various ringtones and includes data uploaded from the calling party's terminal 10. The voice DB 47 stores voice recorded by the caller. The image DB 48 stores images to be displayed instead of a ringtone. The message DB 49 stores text messages to be displayed instead of a ringtone. In addition to the above-described data, the data memory 44 can further store a variety of information.

FIG. 3 is a block diagram illustrating a mobile communication terminal in accordance with an embodiment of the present invention. A structure of a wireless terminal will be described with reference to FIG. 3. A radio frequency (RF) module 21 performs communication for a wireless phone. The RF module 21 is provided with an RF transmitter for up converting and amplifying a frequency of a signal to be transmitted, an RF receiver for low noise amplifying a received signal and down converting its frequency, and so on.

A Modulator-Demodulator (MODEM) 23 is provided with a transmitter for encoding and modulating the signal to be transmitted, a receiver for demodulating and decoding the received signal, and so on.

An audio processor 25 can configure a Coder-Decoder (CODEC). The CODEC is provided with a data CODEC for processing packet data, and so on, and an audio CODEC for processing an audio signal such as voice, and so on. The audio processor 25 converts a digital audio signal received from the MODEM 23 to an analog signal through the audio CODEC and reproduces the audio signal. Moreover, the audio processor 25 converts an analog audio signal generated from a microphone to a digital audio signal through the audio CODEC and transfers the digital audio signal to the MODEM 23. The CODEC is independently provided or can be included in a controller 11.

A keypad 27 is provided with keys for inputting numeric and text information and function keys for setting various functions. The keypad 27 can be provided with a menu selection key, a ringtone selection key, an end key, and on, in accordance with an embodiment of the present invention.

A camera 50 is provided with a camera sensor for capturing an image and converting an optical signal to an electric signal. According to an exemplary implementation, the camera sensor may be a charge coupled device (CCD) sensor.

A signal processor 60 converts an output signal of the camera 50 to an image signal. According to an exemplary implementation, the signal processor 60 may be a digital signal processor (DSP).

An image processor 70 performs a function of generating screen (image) data to display the image signal output from the signal processor 60. The image processor 70 receives the image signal under control of the controller 11 and outputs the image data according to the standard of a display unit 80. The image processor 70 compresses and decompresses the image data. The image processor 70 sends a start address value of the image data output to the display unit 80 or changes the start address value to transfer the changed start address value under the control of the controller 11.

The display unit 80 displays the image data output from the image processor 70. The display unit 80 can use a liquid crystal display (LCD). In case of the LCD, the display unit 80 can be provided with an LCD controller, a memory capable of storing the image data, an LCD element, and so on. When the LCD is implemented using a touch-screen system, the LCD can serve as an input unit. The display unit 80 includes a display for outputting the image data.

A memory 29 can be configured by a program memory and a data memory. The program memory stores a program for controlling the general operation of a wireless phone. The data memory performs a function of temporarily storing data generated while the programs are executed. In accordance with an embodiment of the present invention, the data memory stores music data, melody data, image data, and text message data to be uploaded to the ringtone service server 40. The program memory can store a program capable of accessing a wireless Internet network based on WAP.

The controller 11 performs a function for controlling the overall operation of the wireless terminal. The controller 11 can include the MODEM 23 and the CODEC. According to an exemplary implementation, the controller 11 sends a connection command message to the ringtone service server 40 through the mobile communication network 30 when a menu option for a ringtone provision service is selected in accordance with a first exemplary implementation of an embodiment of the present invention. When a caller service application is supplied, a list of ringtones is displayed and an associated ringtone is selected, a ringtone setup command message is sent. When a called number is input, the input called number is sent to the mobile communication network 30.

The controller 11 sends a ringtone data reception approval message when a request message for ringtone data reception approval is received from the mobile communication network 30 in accordance with a second exemplary implementation of an embodiment of the present invention. When ringtone data is completely received from the ringtone service server 40, the controller 11 sends a ringtone data reception completion message. When a call connection with the calling number is established, a received ringtone is output.

The controller 11 sends a connection command message to the ringtone service server 40 through the mobile communication network 30 and receives a caller service application when a menu option for a ringtone provision service is selected in accordance with a third exemplary implementation of an embodiment of the present invention. When a list of data to be selected for a ringtone is displayed and associated ringtone data is selected, the selected ringtone data is uploaded to the ringtone service server 40. The controller 11 sends a ringtone setup command message. When a called number is input, the controller 11 outputs the input called number and a call connection signal to the mobile communication network 30.

Operation of the wireless terminal will be described with reference to FIG. 3. When a user sets signal transmission mode after a dialing operation through the keypad 27, the controller 11 senses the set signal transmission mode, controls the MODEM 23 to process received dial information, and controls the RF module 21 to convert the processed information to an RF signal and output the RF signal. Subsequently, when an opposite subscriber generates a response signal, the controller 11 senses the response signal through the RF module 21 and the MODEM 23. The user performs a communication function by means of a voice communication path established through the audio processor 25. On the other hand, when signal reception mode is performed, the controller 11 senses the signal reception mode through the MODEM 23 and controls the audio processor 25 to generate a ring signal. Subsequently, when the user makes a response, the controller 11 senses the response. The user performs a communication function by means of a voice communication path established through the audio processor 25. Although an example of voice communication in the signal transmission and reception modes has been described above, a data communication function for communicating packet data and image data other than the voice communication can be performed. When idle mode is entered or text communication is performed, the controller 11 controls the display unit 80 to display text data processed by the MODEM 23.

An operation for setting the ringtone in the wireless terminal according to an exemplary implementation is as follows. When the user selects a menu option for a ringtone provision service using the keypad 27, the controller 11 sends a connection command message to the ringtone provision server 40 through the mobile communication network 30. When the controller 11 receives a caller service application and a list of ringtones from the ringtone service server 40, the controller 11 controls the display unit 80 to display the received list of ringtones. When the user selects an associated ringtone from an associated list of ringtones using the keypad 27, the controller 11 controls the RF module 21 to send a ringtone setup command message. When the user inputs a called number and the SEND key using the keypad 27, the controller 11 senses the input key and controls the RF module 21 to send the called number to the mobile communication network 30.

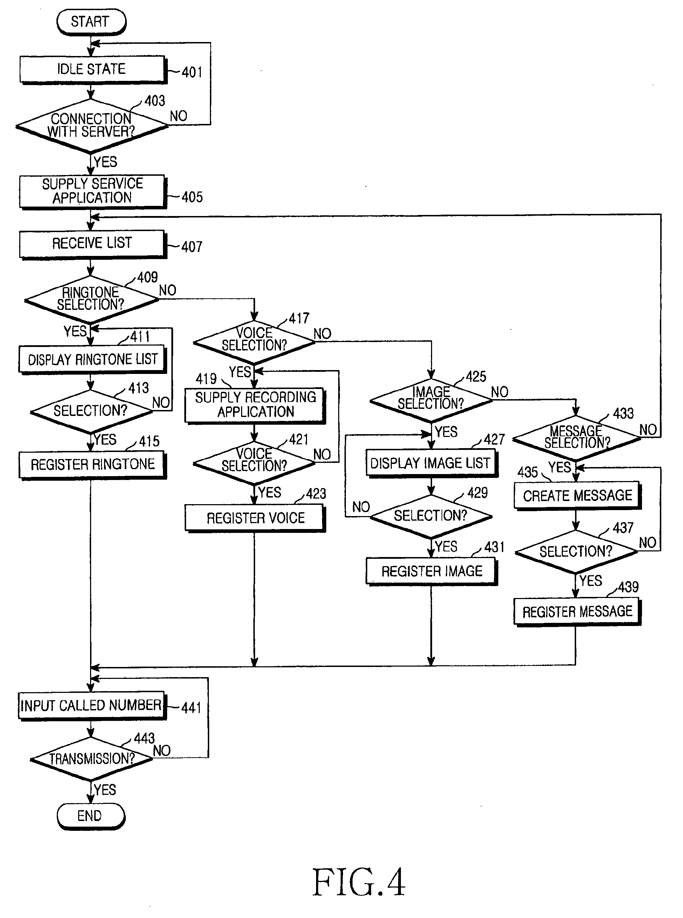

FIG. 4 is a flowchart illustrating an operation for setting a ringtone in a calling party's mobile communication terminal in accordance with a first exemplary implementation of an embodiment of the present invention. An operation in which the mobile communication terminal sets a ringtone stored in the ringtone service server 40 will be described with reference to FIG. 4. When the caller selects a menu option for a ringtone provision service using the keypad 27 provided in the calling party's terminal 10 in an idle state in step 401, the controller 11 senses the selected menu option and controls the memory 29 and the RF module 21 to send a connection command message to the ringtone service server 40 through the mobile communication network 30 in step 403. Then, when the RF module 21 receives caller service approval information from the ringtone service server 40, the controller 11 senses the received approval information in step 405. When a number of the calling party's terminal 10 is analyzed, a determination is made as to whether a calling number has been subscribed to the ringtone provision service. The caller service approval information indicates that the calling number has been connected to the ringtone service server 40.

When a list of incoming call notification data is received from the ringtone service server 40, the controller 11 senses the received list of incoming call notification data and controls the display unit 80 to display the received list of incoming call notification data in step 407.

First, when the caller selects a ringtone option from the received list of incoming call notification data using the keypad 27, the controller 11 senses the selected ringtone option in step 409 and proceeds to step 411 to display a list of ringtones for incoming call notification. Here, the ringtones for incoming call notification are provided from the ringtone DB 46 of the ringtone service server 40 through the communication processor 41.

Then, when the caller selects an associated ringtone using the keypad 27, the controller 11 senses the selected ringtone in step 413 and proceeds to step 415. In step 415, the controller 11 controls the RF module 21 to send a ringtone setup command message to the ringtone service server 40 through the mobile communication network 30, such that the selected ringtone is set as for the incoming call notification.

Second, when the caller selects a voice option from the received list of incoming call notification data using the keypad 27, the controller 11 senses the selected voice option in step 417 and proceeds to step 419 to display a list of voices for incoming call notification. Here, the voices for incoming call notification are provided from the voice DB 47 of the ringtone service server 40 through the communication processor 41.

Then, when the caller selects associated voice using the keypad 27, the controller 11 senses the selected voice in step 421 and proceeds to step 423. In step 423, the controller 11 controls the RF module 21 to send a ringtone setup command message to the ringtone service server 40 through the mobile communication network 30, such that the selected voice is set for the incoming call notification.

Third, when the caller selects an image display option from the received list of incoming call notification data using the keypad 27, the controller 11 senses the selected image display option in step 425 and proceeds to step 427 to display a list of images for incoming call notification. In an exemplary implementation, the images are provided from the image DB 48 of the ringtone service server 40 through the communication processor 41.

Then, when the caller selects an associated image for incoming call notification using the keypad 27, the controller 11 senses the selected image in step 429 and proceeds to step 431. In step 431, the controller 11 controls the RF module 21 to send a ringtone setup command message to the ringtone service server 40 through the mobile communication network 30, such that the selected image is set to display the incoming call notification.

Fourth, when the caller selects a message display option from the received list of incoming call notification data using the keypad 27, the controller 11 senses the selected message display option in step 433 and proceeds to step 435 to display a list of messages for incoming call notification. In an exemplary implementation, the messages are provided from the message DB 49 of the ringtone service server 40 through the communication processor 41.

Then, when the caller selects an associated message for incoming call notification using the keypad 27, the controller 11 senses the selected message in step 437 and proceeds to step 439. In step 439, the controller 11 controls the RF module 21 to send a ringtone setup command message to the ringtone service server 40 through the mobile communication network 30, such that the selected message is set to display the incoming call notification.

Then, when the caller inputs a number of the called party's terminal 20 using the keypad 27 of the calling party's terminal 10, the controller 11 senses the input number and controls the display unit 80 to display the called number in step 441. Then, when the caller inputs the SEND key using the keypad 27, the controller 11 senses the input SEND key and controls the RF module 21 to send the called number to the mobile communication network 30 in step 443.

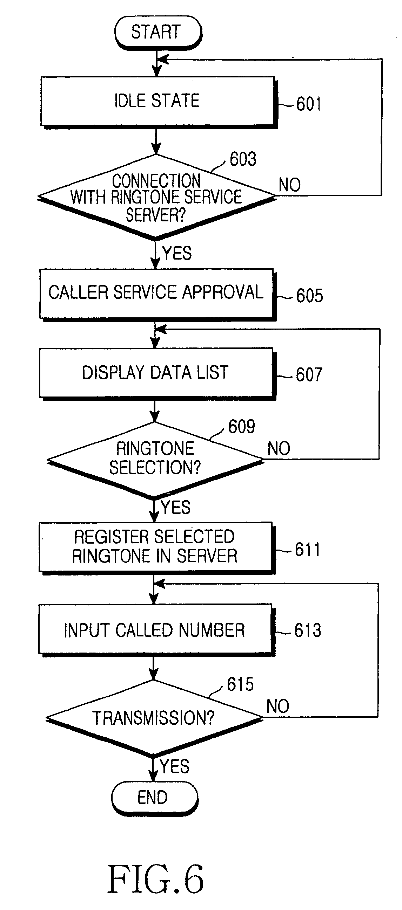

FIG. 6 is a flowchart illustrating an operation for setting a ringtone in a calling party's mobile communication terminal in accordance with a second exemplary implementation of an embodiment of the present invention. The operation for setting a ringtone stored in the mobile communication terminal will be described with reference to FIG. 6.

When the caller selects a menu option for a ringtone provision service using the keypad 27 provided in the calling party's terminal 10 in an idle state in step 601, the controller 11 senses the selected menu option and controls the memory 29 and the RF module 21 to send a connection command message to the ringtone service server 40 through the mobile communication network 30 in step 603. Then, when the RF module 21 receives caller service approval information from the ringtone service server 40, the controller 11 senses the received approval information in step 605. When a number of the calling party's terminal 10 is analyzed, a determination is made as to whether a calling number has been subscribed to the ringtone provision service. The caller service approval information indicates that the calling number has been connected to the ringtone service server 40.

Then, the controller 11 proceeds to step 607 to control the memory 29 and the display unit 80 to display an incoming call notification setup list. In an exemplary implementation, a list of incoming call notification data includes ringtone data, voice registration data, image data, and message data for incoming call notification. The incoming call notification setup list can be configured in the form of a menu as in a phone book or can be configured on a group-by-group basis.

Then, when the caller selects a desired ringtone from the list of incoming call notification data using the keypad 27, the controller 11 senses the selected ringtone in step 609 and proceeds to step 611. In step 611, the controller 11 controls the RF module 21 to send a ringtone setup command message to the ringtone service server 40 through the mobile communication network 30. The selected ringtone is registered in the ringtone service server 40 and is set for incoming call notification. For example, when an image display option for incoming call notification is selected from the list of incoming call notification data, a list of images for incoming call notification is displayed. When an associated image is selected and a ringtone setup command message is sent to the ringtone service server 40 through the mobile communication network 30, the selected image is registered in the ringtone service server 40 and is set for incoming call notification.

Then, when the caller inputs a number of the called party's terminal 20 using the keypad 27 of the calling party's terminal 10, the controller 11 senses the input number and controls the display unit 80 to display the called number in step 613. Then, when the caller inputs the SEND key using the keypad 27, the controller 11 senses the input SEND key and controls the RF module 21 to send the called number to the mobile communication network 30 in step 615.

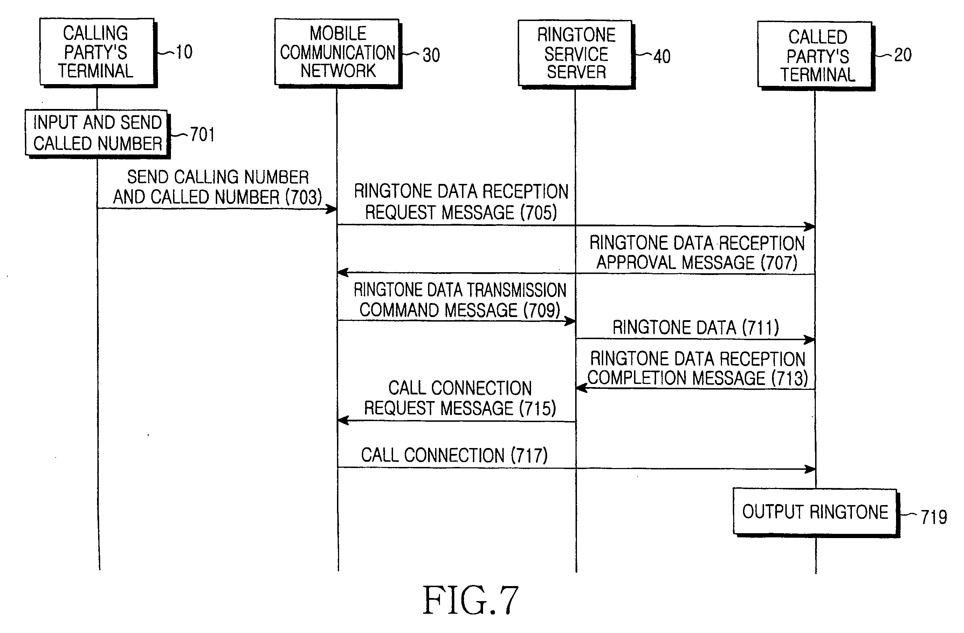

FIG. 7 is a flowchart illustrating the operation of the ringtone provision system in accordance with an embodiment of the present invention. The operation of the ringtone provision system will be described with reference to FIG. 7. It is assumed that the caller has set a ringtone as described in relation to FIG. 4.

When the caller inputs a number of the called party's terminal 20 and the SEND key using the keypad 27, the controller 11 senses the input SEND key and controls the RF module 21 to send the input number to the mobile communication network 30 in step 701. Then, the mobile communication network 30 receives a number of the calling party's terminal 10 and the number of the called party's terminal 20 in step 703. Then, the mobile communication network 30 sends a request message for receiving ringtone data set by the caller to the called party's terminal 20 in step 705. Upon receiving the ringtone data reception request message, the called party's terminal 20 sends a ringtone data reception approval message to the mobile communication network 30 in step 707. Then, the mobile communication network 30 sends a command message for transmitting the ringtone data, set by the caller, to the ringtone service server 40 in step 709. Then, the ringtone service server 40 transmits the ringtone data, set by the caller, to the called party's terminal 20 through the mobile communication network 30 in step 711. Then, when the ringtone data has been completely received, the called party's terminal 20 sends a message indicating that the ringtone data has been completely received to the ringtone service server 40 through the mobile communication network 30 in step 713. Upon receiving the ringtone data reception completion message, the ringtone service server 40 sends a message for requesting a call connection with the called party's terminal 20 to the mobile communication network 30 in step 715. Then, the mobile communication network 30 establishes the call connection between the calling party's terminal 10 and the called party's terminal 20 in step 717. Then, the called party's terminal 20 outputs a received ringtone in step 719.

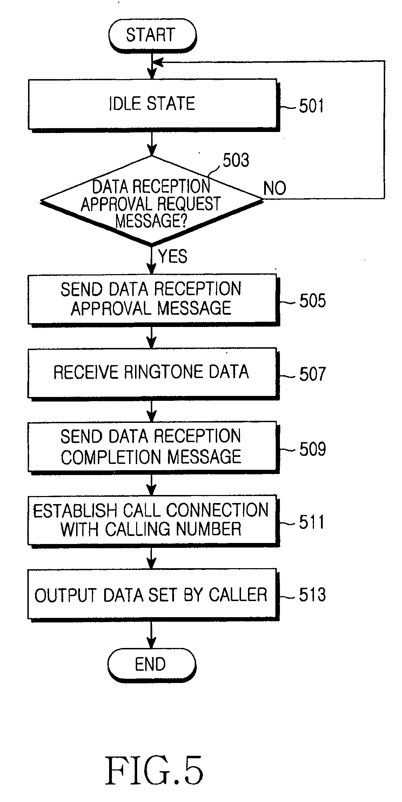

FIG. 5 is a flowchart illustrating an operation for receiving and setting a ringtone in a called party's mobile communication terminal in accordance with an embodiment of the present invention. The operation for receiving and setting a ringtone in the mobile communication terminal will be described with reference to FIGS. 5 and 7.

The mobile communication network 30 receives a number of the calling party's terminal 10 and a number of the called party's terminal 20 (Step 703). Then, the mobile communication network 30 sends a request message for receiving ringtone data, set by the caller, to the called party's terminal 20 (Step 705). Then, when the request message for receiving the ringtone data is received through the RF module 21 in the idle state in step 501, the controller 11 senses the received message and sends a ringtone data reception approval message to the mobile communication network 30 in step 505 (Step 707). Then, the mobile communication network 30 sends a command message for transmitting the ringtone data, set by the caller, to the ringtone service server 40 (Step 709). Then, when the ringtone service server 40 sends the ringtone data, set by the caller, to the called party's terminal 20 through the mobile communication network 30 (Step 711), the controller 11 senses and receives the ringtone data set by the caller in step 507. When the ringtone data has been completely received, the controller 11 controls the RF module 21 to send a message indicating that the ringtone data has been completely received through the mobile communication network 30 to the ringtone service server 40 in step 509 (Step 713). Upon receiving the ringtone data reception completion message, the ringtone service server 40 sends a message for requesting a call connection with the called party's terminal 20 to the mobile communication network 30 (Step 715). Then, the mobile communication network 30 establishes the call connection between the calling party's terminal 10 and the called party's terminal 20. Then, when the RF module 21 of the called party's terminal 20 receives a call connection signal, the controller 11 senses the received signal and establishes the call connection in step 511 and then the controller 11 controls the audio processor 25 to output the received ringtone in step 513.

As is apparent from the above description, the present invention allows a caller to set a ringtone of a called party's terminal and allocates a ringtone or incoming call notification for identifying the caller to a mobile communication terminal of a called person familiar with the caller, thereby calling the mobile communication terminal of the called person using a unique ringtone based on personality of the caller.

Although exemplary embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims, along with their full scope of equivalents.

## Claims

1. A method for setting incoming call notification of first mobile communication terminal of a called party in a second mobile communication terminal of a calling party, the method comprising the steps of:
establishing a connection with an incoming call notification service server in a second mobile communication terminal of a calling party at a time of an incoming call notification setup operation;
receiving and displaying a list of registered incoming call notification data from the connected incoming call notification service server; and
when the calling party selects an incoming call notification data element from the displayed list of incoming call notification data, sending information indicative of the selected incoming call notification data element to the incoming call notification service server.

2. The method of claim 1, wherein the step of establishing the connection with the incoming call notification service server comprises the steps of:
sending a connection request message to the incoming call notification service server through a mobile communication network; and
receiving service approval information in response to the connection request message from the incoming call notification service server.

3. The method of claim 1, wherein the list of incoming call notification data received from the incoming call notification service server comprises at least one of ringtone data, voice data, image data, and message data.

4. A method for setting incoming call notification of a first mobile communication terminal of a called party in a second mobile communication terminal of a calling party, the method comprising the steps of:
sending registered incoming call notification data from an incoming call notification service server to a first mobile communication terminal of a called party when a call request is sent from a second mobile communication terminal of the calling party to the first mobile communication terminal through a mobile communication network;
sending an incoming call notification data reception completion message to the mobile communication network when the incoming call notification data has been completely received; and
outputting data set for the incoming call notification when a call connection request is received from the mobile communication network.

5. The method of claim 4, wherein the step of sending the registered incoming call notification data from the incoming call notification service server to the first mobile communication terminal comprises sending an incoming call notification data reception approval message when an incoming call notification reception request message is received from the incoming call notification service server.

6. The method of claim 4, wherein the output incoming call notification data comprises at lest one of ringtone data, voice data, image data, and message data.

7. A method for setting incoming call notification of a first mobile communication terminal of a called party in a second mobile communication terminal of the calling party, the method comprising the steps of:
displaying a list of registered incoming call notification data in a second mobile communication terminal of a calling party at a time of a ringtone setup operation;
sending a connection request message to an incoming call notification service server when the calling party selects an incoming call notification data element from the displayed list of incoming call notification data; and
registering the selected incoming call notification data element in the incoming call notification service server when a connection with the incoming call notification service server is established.

8. The method of claim 7, wherein the list of incoming call notification data received from the incoming call notification service server comprises at least one of ringtone data, voice data, image data, and message data.

9. A ringtone service server comprising
a communication processor for transmits data to and receives data from a first mobile communication terminal of a called party and a second mobile communication terminal of the calling party through a mobile communication network; and
a first processor for the calling party which sets a ringtone, and transmits the set ringtone, in response to a command received from the second mobile communication terminal so that the first mobile communication terminal receives the set ringtone.

10. The ringtone service server of claim 9, further comprising a second processor for the called party for sending the set ringtone to the first mobile communi cation terminal in response to the ringtone setup command received through the communication processor 41.

11. The ringtone service server of claim 10, wherein the first mobile communication terminal receives and stores the ringtone, and when a call connection is established, the first mobile communication terminal generates the received ringtone.

12. The ringtone service server of claim 9, further comprising a data memory, the data memory comprising at least one of a data list database (DB), a ringtone DB, a voice DB, an image DB, and a message DB for incoming call notification. The data list DB 45 stores a list of data stored in each DB. A ringtone DB 46 stores various ringtones and includes data uploaded from the calling party's terminal 10. The voice DB 47 stores voice recorded by the caller. The image DB 48 stores images to be displayed instead of a ringtone.

13. A mobile communication terminal comprising:
a radio frequency (RF) module for performing wireless phone communication; for a wireless phone;
a Modulator-Demodulator (MODEM) for encoding and modulating a transmitted signal and for demodulating and decoding a received signal;
an input for receiving a service selection;
an output for outputting a ringtone;
a display for displaying an image signal;
a program memory for controlling the general operation of a wireless phone;
a data memory for temporarily storing data generated while the programs are executed; and
a controller for sending a connection command message to a ringtone service server through a mobile communication network when the service selection received from the input comprises a ringtone provision service.

14. The mobile communication terminal of claim 13, wherein the controller sends a ringtone data reception approval message when a request message for ringtone data reception approval is received from the mobile communication network.

15. The mobile communication terminal of claim 14, wherein when ringtone data is completely received from the ringtone service server, the controller sends a ringtone data reception completion message.

16. The mobile communication terminal of claim 15, wherein the controller sends a connection command message to the ringtone service server through the mobile communication network and receives a caller service application when a menu option for a ringtone provision service is selected via the input.

17. The mobile communication terminal of claim 16, wherein, when a list of data to be selected for the ringtone is displayed on the display, and an associated ringtone data is selected via the input, the selected ringtone data is uploaded to the ringtone service server.

18. The mobile communication terminal of claim 17, wherein the controller sends a ringtone setup command message to the ringtone service server, and when the called number is input via the input, the controller outputs the input called number and a call connection signal to the mobile communication network.
